# EUROPÄISCHE PATENTSCHRIFT

(11) **EP 4 568 890 B1**
(45) Veröffentlichungstag und Bekanntmachung des Hinweises auf die Patenterteilung: **07.10.2026**
(21) Anmeldenummer: 23757546.9
(22) Anmeldetag: 09.08.2023
(51) Int. Cl.: B64D 11/06, B60N 2/90

(54) **PASSAGIERSITZVORRICHTUNG**
PASSENGER SEAT DEVICE
DISPOSITIF DE SIÈGES PASSAGERS

(30) Priorität: 10.08.2022 DE 102022120208
(43) Veröffentlichungstag der Anmeldung: 18.06.2025
(73) Patentinhaber: Recaro Aircraft Seating GmbH & Co. KG, 74523 Schwäbisch Hall (DE)
(72) Erfinder: WIELAND, Markus, 74523 Sittenhardt (DE)
(74) Vertreter: Daub, Thomas
(86) Internationale Anmeldenummer: PCT/EP2023/072086
(87) Internationale Veröffentlichungsnummer: WO 2024/033430

(56) Entgegenhaltungen:
- EP-A1- 1 097 864
- CN-A- 109 228 987
- US-A- 4 509 795

## Beschreibung

### Stand der Technik

Die Erfindung betrifft eine Passagiersitzvorrichtung nach dem Patentanspruch 1.

Es ist bereits eine Passagiersitzvorrichtung, mit einer Aufständereinheit, mit einem Beinabstützmodul, das an der Aufständereinheit schwenkbar gelagert ist, mit einem Lagermodul, das dazu vorgesehen ist, das Beinabstützmodul zwischen einer Verstaustellung und einer maximal ausgelenkten Stellung zu verstellen, mit einem Aktuator, der dazu vorgesehen ist, eine Verstellkraft auf das Beinabstützmodul auszuüben, vorgeschlagen worden.

EP1097864A1 offenbart einen Sitz für Passagierfahrzeuge, beispielsweise für Flugzeuge, mit einer zwischen Aktuatoren und einem Sitzboden angeordneten Nachlaufvorrichtung, die es ermöglicht, eine Beinabstütze in eine ausgefahrene Stellung zu bewegen, wenn der Sitz zurückgelehnt wird, unabhängig von den Aktuatoren. US4509795A offenbart eine selbst ausfahrende Beinabstützanordnung mit einem federbelasteten hydraulischen Verriegelungsmechanismus zum Bewegen einer Beinplatte zwischen einer Verstauposition und einer Gebrauchsposition. CN109228987A offenbart einen Beinabstützmechanismus für einen Sitz, wobei eine Motorhalterung über einen Motor mit der Unterseite eines Sitzrahmens verbunden ist, der Beinabstützmechanismus eine feste Halterung aufweist und in einem Gleitblock eine Gleitnut angeordnet ist, um eine Überlast aufzunehmen. Die Aufgabe der Erfindung besteht insbesondere darin, eine gattungsgemäße Vorrichtung mit verbesserten Eigenschaften hinsichtlich einer Sicherheit und eines Komforts bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Passagiersitzvorrichtung, mit einer Aufständereinheit, mit einem Beinabstützmodul, das an der Aufständereinheit schwenkbar gelagert ist, mit einem Lagermodul, das dazu vorgesehen ist, das Beinabstützmodul zwischen einer Verstaustellung und einer maximal ausgelenkten Stellung zu verstellen, mit einem Aktuator, der dazu vorgesehen ist, eine Verstellkraft auf das Beinabstützmodul auszuüben.

Es wird vorgeschlagen, dass ein Überlastverriegelungsmodul dazu vorgesehen ist, das Beinabstützmodul in einem Überlastfall mechanisch zu verriegeln. Unter einer "Passagiersitzvorrichtung" soll vorzugsweise eine Vorrichtung verstanden werden, die zu mindestens einen Teil eines Passagiersitzes und/oder den gesamten Passagiersitz ausbildet. Unter einem "Passagiersitz" soll vorzugsweise insbesondere ein Sitz verstanden werden, der dazu vorgesehen ist, einen Sitzbereich für einen Passagier auszubilden und dazu in einem Transportmittel angeordnet ist. Vorzugsweise ist der Passagiersitz als ein Flugzeugsitz oder als ein Zugsitz ausgebildet. Grundsätzlich wäre es auch denkbar, dass der Passagiersitz als ein Sitz für ein anderes Transportmittel ausgebildet ist. Der Passagiersitz ist vorzugsweise als Teil einer Sitzreihe von mehreren nebeneinander angeordneten Passagiersitzen ausgebildet. Der Passagiersitz umfasst vorzugsweise wenigstens einen Sitzboden, der einen Sitzbereich für einen Passagier ausbildet, eine Rückenlehne, die eine Rückenlehnenauflagefläche bereitstellt, an der sich ein auf dem Passagiersitz sitzender Passagier mit seinem Rücken abstützen kann. Unter einem "Sitzboden" soll dabei insbesondere ein Teil des Passagiersitzes verstanden werden, der einen Sitzbereich bereitstellt, auf dem ein Passagier sitzen kann, wobei der Sitzboden dabei vorzugsweise wenigstens einen Grundkörper und ein auf dem Grundkörper angeordnetes Polsterelement aufweist. Unter einem "Beinabstützmodul" soll vorzugsweise ein Modul mit wenigstens einem Beinabstützelement und wenigstens dessen Lagerung verstanden werden, mittels dessen das Beinabstützmodul befestigbar, insbesondere an dem Passagiersitz befestigbar ist. Unter einem "Beinabstützelement" soll vorzugsweise ein Element verstanden werden, das eine Auflagefläche bereitstellt, die dazu vorgesehen ist, dass ein auf dem Passagiersitz sitzender Passagier in zumindest einer Stellung des Beinabstützelements sein Bein und/oder seinen Fuß ablegen kann. Das Beinabstützelement umfasst vorzugsweise ein Polsterelement, das die Auflagefläche ausbildet. Unter einer "Aufständereinheit" soll vorzugsweise eine Grundstruktur des Passagiersitzes verstanden werden, die eine tragende Struktur des Passagiersitzes ausbildet. Grundsätzlich ist es auch denkbar, dass das Beinabstützmodul als eine Sitzbodenverlängerung ausgebildet ist, die in einer maximal verstellten Stellung im Wesentlichen parallel zu dem Sitzboden ausgerichtet ist. Über die Aufständereinheit ist der Passagiersitz auf einer Aufständerebene, wie insbesondere einem Kabinenboden angebunden. Die Aufständereinheit weist vorzugsweise zumindest zwei Sitzfüße und zumindest ein Querelement auf, das mit den Sitzfüßen gekoppelt ist. Das Querelement bildet ein Tragrohr aus. Vorzugsweise weist die Aufständereinheit zwei Querelemente auf, ein vorderes Querelement und ein hinteres Querelement.

Unter "an der Aufständereinheit schwenkbar gelagert" soll vorzugsweise verstanden werden, dass das Beinabstützmodul direkt oder indirekt an der Aufständereinheit angebunden ist. Vorzugsweise ist das Beinabstützmodul an einem Tragrohr der Aufständereinheit schwenkbar gelagert. Grundsätzlich wäre es auch denkbar, dass das Beinabstützmodul an dem Sitzboden, beispielsweise an einem Grundkörper des Sitzbodens schwenkbar angebunden ist. Unter einer "Verstaustellung" soll vorzugsweise eine Nichtgebrauchsstellung des Beinabstützmoduls verstanden werden, in der das Beinabstützmodul vorzugsweise möglichst platzsparend an den Passagiersitz, insbesondere die Aufständereinheit angeklappt ist. Unter einer "maximal ausgelenkten Stellung" soll vorzugsweise eine Stellung des Beinabstützmoduls verstanden werden, in der das Beinabstützmodul maximal aus seiner Verstaustellung herausbewegt ist. Die maximal ausgelenkte Stellung bildet eine Gebrauchsstellung des Beinabstützmoduls aus. Beispielsweise ist es denkbar, dass eine Auflagefläche des Beinabstützmoduls in der maximal ausgelenkten Stellung im Wesentlichen parallel zu einer Sitzoberfläche eines Sitzbodens des Passagiersitzes ausgebildet ist. Unter "verstellen" soll vorzugsweise zwischen zumindest zwei Stellungen bewegen verstanden werden, wobei eine Verstellbewegung vorzugsweise zumindest teilweise von einer Rotationsbewegung gebildet ist.

Unter einem "Aktuator" soll dabei ein Element verstanden werden, das zumindest in einem betätigten Zustand eine Verstellkraft bereitstellen kann. Die Verstellkraft stellt eine Kraft dar, die der Aktuator in betätigtem Zustand bereitstellt, um ein zu verstellendes Element, wie beispielsweise das Beinabstützmodul zu verstellen. Der Aktuator ist vorzugsweise als eine Gasdruckfeder ausgebildet. Grundsätzlich ist es auch denkbar, dass der Aktuator als ein mechanischer Aktuator ausgebildet ist, der zumindest eine mechanische Feder, wie beispielsweise eine Spiralfeder aufweist. Die mechanische Feder des Aktuators wäre durch eine entsprechende Mechanik zwischen einem verriegelten Zustand und einem entriegelten Zustand verstellbar. Der Aktuator weist einen Betätigungspin auf, der betätigt werden muss, damit der Aktuator die Verstellkraft bereitstellt. Der Betätigungspin ist dazu vorgesehen, um einen Betätigungsweg verstellt zu werden, um den Aktuator zu aktivieren. Der Betätigungsweg beträgt vorzugsweise unter 1 mm, besonders bevorzugt unter 0,5 mm. Der Betätigungspin muss mit einer in Verstellrichtung des Betätigungspins wirkenden Betätigungskraft betätigt werden, damit dieser verstellt wird. Die Betätigungskraft ist als eine Kraft ausgebildet, mit der der Aktuator, insbesondere der Betätigungspin des Aktuators betätigt werden muss, um in den betätigten Zustand verstellt zu werden und die Verstellkraft bereitzustellen. Die Betätigungskraft des Betätigungspins beträgt vorzugsweise 20 N - 50 N. Besonders bevorzugt ist die Betätigungskraft unter 30 N. Der Aktuator weist eine Überlastkraft (Overide Kraft) auf, bei der der Aktuator öffnet, also sich entlang seiner Verstellachse öffnet, also bei der der Aktuator in seiner Verstellachse gelängt wird. Die Überlastkraft des Aktuators beträgt vorzugsweise weniger als 2500 N, besonders bevorzugt unter 2000 N und besonders bevorzugt ca. 1800 N. Unter einem "Überlastverriegelungsmodul" soll vorzugsweise ein separates Modul verstanden werden, das in einem Überlastfall, insbesondere wenn der Aktuator über seine Überlastkraft hinaus in seiner Verstellachse belastet wird, das Beinabstützmodul mechanisch verriegelt. Das Überlastverriegelungsmodul ist getrennt von dem Aktuator ausgebildet. Unter einem "Überlastfall" soll vorzugsweise ein Betriebszustand verstanden werden, in dem der Aktuator entlang seiner Verstellachse mit einer Kraft belastet wird, die größer ist als seine Überlastkraft. Ein Überlastfall kann beispielsweise durch auf die Passagiersitzvorrichtung wirkende Verzögerungskräfte, beispielsweise während einem Crashtest oder einem Unfall verstanden werden. Beispielsweise kann ein Überlastfall während eines 16G Crashtests des Passagiersitzes auftreten. Ein Überlastfall kann beispielsweise ebenso durch einen Falschgebrauch des Beinabstützmoduls oder des Aktuators eintreten, bei dem der Aktuator durch eine händische Verfahrung durch eine Person in seiner Verstellachse auseinandergezogen, also gelängt wird. Der Überlastfall wird dabei vorzugsweise lediglich rein mechanisch detektiert. Grundsätzlich wäre es in einer alternativen Ausgestaltung auch denkbar, dass der Überlastfall über einen elektrischen oder elektronischen Sensor erfolgt. Unter einer "händischen Verfahrung" soll vorzugsweise eine Längung des Aktuators durch eine von einer Person auf den Aktuator in der Verstellachse ausgeübte Kraft verstanden werden, ohne dass der Aktuator mittels des Betätigungspins betätigt ist. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch eine erfindungsgemäße Ausgestaltung kann vorteilhaft eine mechanische Verriegelung des Beinabstützmoduls bereitgestellt werden. Die Verriegelung des Beinabstützmoduls kann durch ein konstruktiv besonders einfaches Überlastverriegelungsmodul bereitgestellt werden. Dadurch kann eine Passagiersitzvorrichtung bereitgestellt werden, die in einem Überlastfall besonders sicher ausgebildet werden kann. Das Beinabstützmodul kann vorteilhaft gegen eine nicht ordnungsgemäße Verstellung gesichert werden. Insbesondere während eines Crashtests oder einem tatsächlichen Unfall kann ein Aufschwenken des Beinabstützmoduls vorteilhaft verhindert werden, wodurch insbesondere ein Fluchtweg freigehalten werden kann.

Weiter wird vorgeschlagen, dass eine Detektion des Überlastfalls rein mechanisch erfolgt. Darunter, dass die Detektion des Überlastfalls rein mechanisch erfolgt soll insbesondere verstanden werden, dass eine Detektion lediglich über eine mechanische Verstellung eines Teils des Beinabstützmoduls, oder des Aktuators erfolgt. Die Detektion des Überlastfalls erfolgt insbesondere nicht über einen Sensor elektrisch oder elektronisch. Dadurch kann eine Detektion besonders einfach erfolgen.

Das Überlastverriegelungsmodul ist dazu vorgesehen, das Trägheitsmoment des Beinabstützmoduls oder eine Krafteinwirkung auf den Aktuator in eine Verstellkraft zur Verriegelung des Überlastverriegelungsmoduls umzuwandeln. In einem Crashtest ist das Überlastverriegelungsmodul dazu vorgesehen, durch das Trägheitsmoment des Beinstützmoduls ausgelöst zu werden. Durch die während eines Crashtests oder während einem Unfall auf die Passagiersitzvorrichtung, insbesondere auf das Beinabstützmodul wirkende Kraft, wird das Beinabstützmodul über das Lagermodul aufgeschwenkt und dadurch eine Kraft auf den Aktuator entlang seiner Verstellrichtung ausübt, die die Überlastkraft des Aktuators überschreitet. Unter einer Krafteinwirkung auf den Aktuator, soll vorzugsweise auch eine auf den Aktuator wirkende Kraft durch eine händische Verstellung des Beinabstützmoduls oder des Aktuators in seiner Verstellrichtung verstanden werden. Unter der Krafteinwirkung soll insbesondere eine Zugkraft verstanden werden, die auf den Aktuator wirkt, die über dessen Überlastkraft hinaus geht. Dadurch kann die Überlastvorrichtung besonders einfach ausgelöst werden, um das Beinabstützmodul mechanisch zu verriegeln.

Es wird weiterhin vorgeschlagen, dass das Überlastverriegelungsmodul ein mit dem Aktuator gekoppeltes Sperrelement aufweist, das dazu vorgesehen ist, zur Verriegelung des Überlastverriegelungsmoduls in einem Überlastfall aus seiner Normalposition in eine Sperrposition verstellt zu werden. Unter einem "Sperrelement" soll vorzugsweise ein

Element, insbesondere ein Formschlusselement verstanden werden, das in einer Sperrposition dazu vorgesehen ist, mit einem korrespondierend ausgebildeten Formschlusselement in einen formschlüssigen Kontakt zu treten, um das Beinabstützmodul mechanisch zu verriegeln. In einer Normalposition ist das Sperrelement dazu vorgesehen, nicht in einen formschlüssigen Kontakt mit dem korrespondierend ausgebildeten Formschlusselement treten zu können. In der Normalstellung des Sperrelements kann das Beinabstützmodul von seiner Verstaustellung in seiner maximal verstellten Stellung verstellt werden, ohne dass das Sperrelement mit dem korrespondierend ausgebildeten Formschlusselement in formschlüssigen Kontakt kommt. Dadurch kann das Überlastungsmodul besonders einfach für eine mechanische Verriegelung des Beinabstützmoduls ausgebildet werden.

Des Weiteren wird vorgeschlagen, dass das Überlastverriegelungsmodul ein Formschlusselement aufweist, das mit dem Beinabstützmodul verbunden ist und dazu vorgesehen ist, zur Verriegelung des Überlastverriegelungsmoduls in einem Überlastfall an dem Sperrelement, das sich in seiner Sperrposition befindet, anzuschlagen. Das Formschlusselement ist vorzugsweise mit einem Grundträger des Beinabstützmoduls verbunden. Das Formschlusselement ist vorzugsweise als ein Hakenelement ausgebildet. Dadurch kann das Überlastverriegelungsmodul besonders einfach ausgebildet werden.

Weiterhin wird vorgeschlagen, dass die Passagiersitzvorrichtung ein Befestigungselement aufweist, das zur Anbindung des Aktuators an die Aufständereinheit vorgesehen ist, wobei das Befestigungselement das Sperrelement des Überlastverriegelungsmoduls ausbildet. Unter einem "Befestigungselement" soll vorzugsweise ein Element verstanden werden, das den Aktuator formschlüssig an die Aufständereinheit anbindet. Das Befestigungselement ist vorzugsweise als ein Befestigungsbolzen, als ein Befestigungsstift oder eine Befestigungsschraube ausgebildet. Grundsätzlich wäre es auch denkbar, dass das Befestigungselement als ein anderes Formschlusselement ausgebildet ist. Das Befestigungselement bildet das Sperrelement des Überlastverriegelungsmoduls einstückig aus. Dadurch kann das Sperrelement besonders einfach ausgebildet werden. Dadurch kann das Überlastverriegelungsmodul besonders einfach ausgebildet werden.

Außerdem wird vorgeschlagen, dass das Überlastverriegelungsmodul eine als Langloch ausgebildete Aufnahme aufweist, in der das Befestigungselement verschiebbar gelagert ist. Vorzugsweise weist das Langloch eine gerade Erstreckung auf. Dadurch kann das Befestigungselement, besonders einfach als das zwischen seinen Stellungen verstellbare Sperrelement ausgebildet werden.

Es wird weiter vorgeschlagen, dass das Überlastverriegelungsmodul zumindest ein Federmodul aufweist, das dazu vorgesehen ist, eine Federkraft auf das Sperrelement auszuüben, welche dazu vorgesehen ist, das Sperrelement in einem Normalbetriebszustand in seiner Normalstellung zu halten. Unter einem "Federmodul" soll vorzugsweise ein Modul verstanden werden, das zumindest ein Federelement aufweist. Vorzugsweise ist das zumindest eine Federelement als eine mechanische Feder ausgebildet. Vorzugsweise ist das zumindest eine Federelement als eine Zugfeder ausgebildet, insbesondere als eine Spiralfeder. Dadurch kann das Überlastverriegelungsmodul besonders einfach ausgebildet werden, um das Sperrelement während des Normalbetriebs in seiner Normalstellung zu halten.

Zudem wird vorgeschlagen, dass der Aktuator eine Überlastkraft aufweist, die zumindest doppelt so groß ist wie eine Federkraft des Federmoduls. Dadurch kann das Sperrelement besonders vorteilhaft sicher ausgelöst werden, bevor der Aktuator mit einer Kraft belastet wird, die größer ist als seine Überlastkraft. Dadurch kann das Überlastverriegelungsmodul bei einem Überlastfall besonders einfach verriegelt werden.

Weiter wird vorgeschlagen, dass das Lagermodul einen Lagerbock aufweist, der zur Befestigung an der Aufständereinheit vorgesehen ist, und der die als Langloch ausgebildete Aufnahme ausbildet, die zur Anbindung des Befestigungselements vorgesehen ist. Dadurch kann das Lagermodul besonders einfach ausgebildet werden und vorteilhaft einen Teil des Überlastverriegelungsmoduls ausbilden.

Ferner wird vorgeschlagen, dass das Beinabstützmodul einen Grundträger aufweist, der schwenkbar an der Aufständereinheit angebunden ist und der das Formschlusselement des Überlastverriegelungsmoduls ausbildet. Unter einem "Grundträger" soll vorzugsweise ein Trägerelement des Beinabstützmoduls verstanden werden, das eine Montageplatte für das Beinabstützmodul ausbildet, an dem die Elemente des Beinabstützmoduls montiert sind. Dadurch kann das Beinabstützmodul besonders einfach ausgebildet werden.

Es wird weiterhin vorgeschlagen, dass das Federmodul dazu vorgesehen ist, das Beinabstützmodul nach einer erfolgten Verriegelung nach Wegfall einer Überlastkraft wieder in seine Verstaustellung zu verstellen. Dadurch kann das Überlastverriegelungsmodul besonders vorteilhaft ausgebildet werden, sodass das Beinabstützmodul nach einer unzulässigen Verstellung wieder aus einem Fluchtweg heraus bewegt werden kann.

Die erfindungsgemäße Passagiersitzvorrichtung soll hierbei nicht auf die oben beschriebene Anwendung und Ausführungsform beschränkt sein. Insbesondere kann die erfindungsgemäße Passagiersitzvorrichtung zu einer Erfüllung einer hierin beschriebenen Funktionsweise eine von einer hierin genannten Anzahl von einzelnen Elementen, Bauteilen und Einheiten abweichende Anzahl aufweisen, sofern diese in den Schutzbereich der beigefügten Ansprüche fallen.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen, sofern diese in den Schutzbereich der beigefügten Ansprüche fallen.

Es zeigen:
- Fig. 1: eine schematische Darstellung einer erfindungsgemäßen Passagiersitzvorrichtung mit einem Teil eines Passagiersitzes und einem Beinabstützmodul in einer Verstaustellung,
- Fig. 2: eine schematische Darstellung des Passagiersitzes und des Beinabstützmoduls in einer Verriegelstellung eines Überlastverriegelungsmoduls,
- Fig. 3: eine weitere schematische Ansicht eines Beinabstützmoduls, mit einem Überlastverriegelungsmodul in einer Verriegelstellung,
- Fig. 4: eine weitere Detail-Schnittansicht durch ein Lagermodul und das Überlastverriegelungsmodul,
- Fig. 5: eine schematische Ansicht einer erfindungsgemäßen Passagiersitzvorrichtung in einem zweiten Ausführungsbeispiel mit einem Beinabstützmodul und einem Überlastverriegelungsmodul und
- Fig. 6: eine weitere schematische Ansicht des Beinabstützmoduls mit einem Überlastverriegelungsmodul.

### Beschreibung der Ausführungsbeispiele

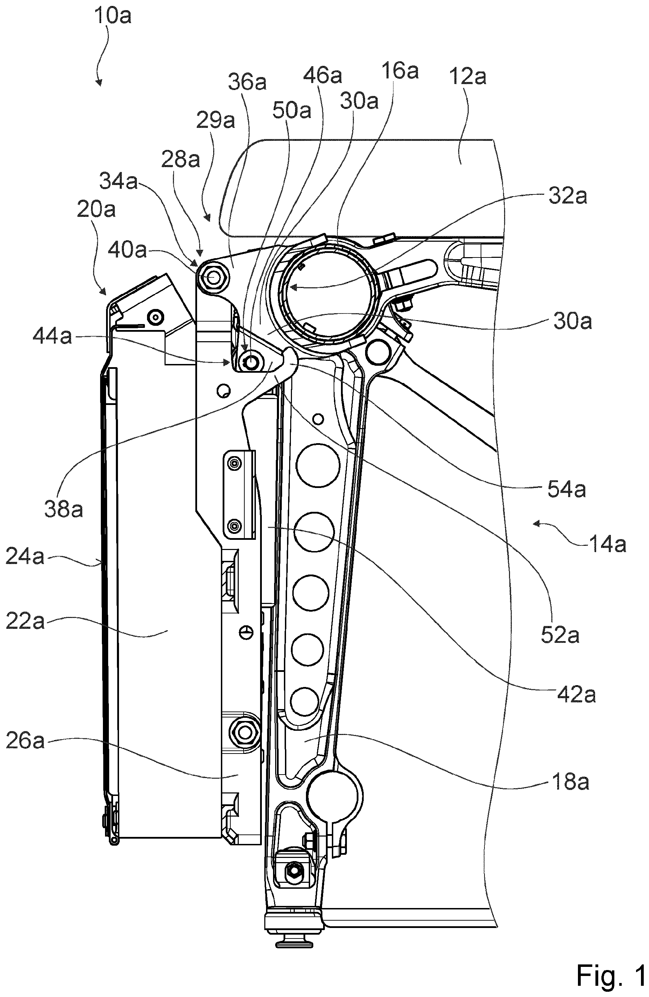

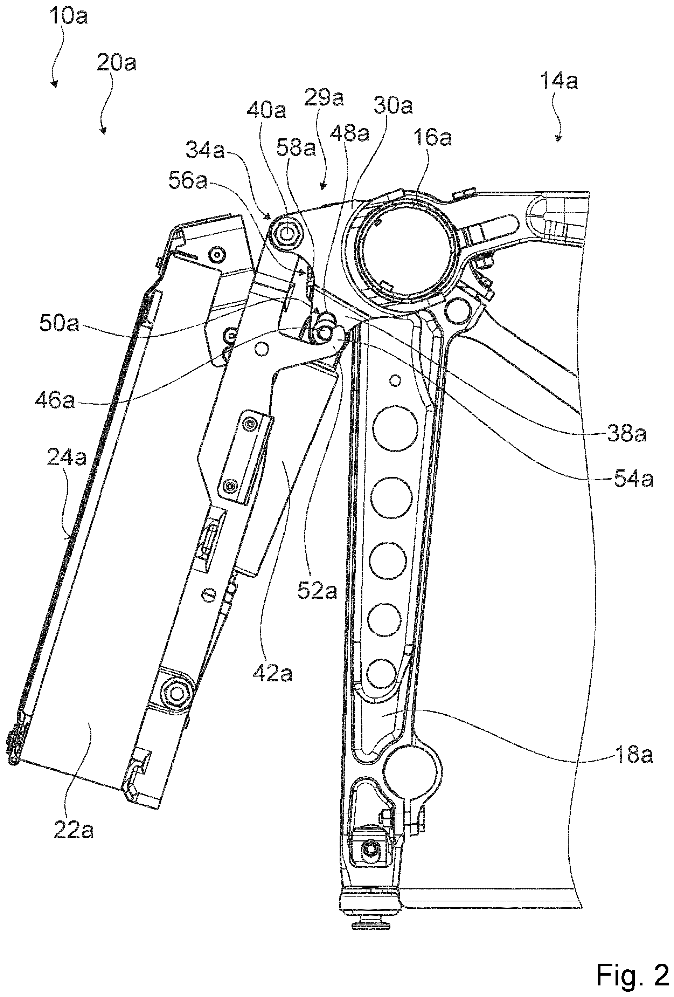

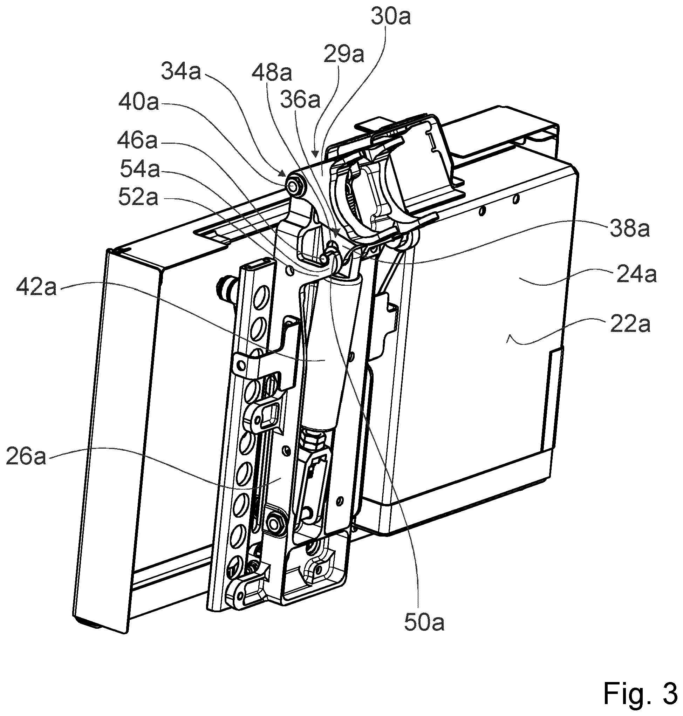

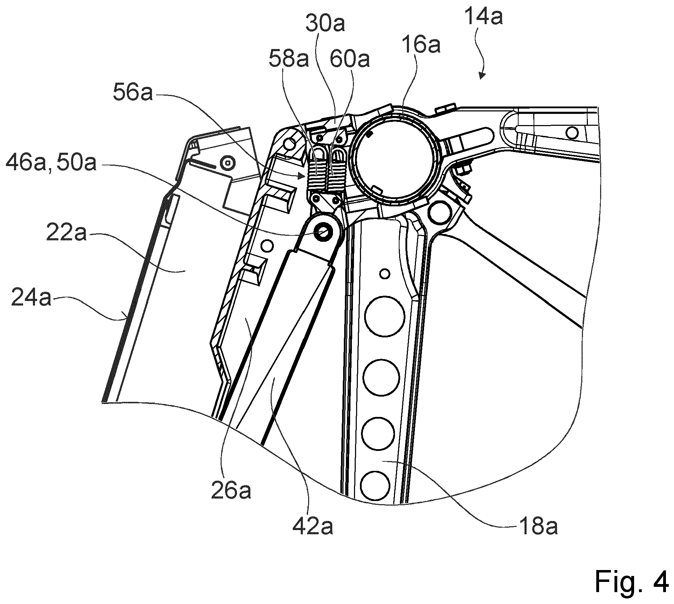

Die Figuren 1 bis 4 zeigen eine erfindungsgemäße Passagiersitzvorrichtung in einem ersten Ausführungsbeispiel. Die Passagiersitzvorrichtung ist Teil eines Passagiersitzes 10a, der in Figur 1 teilweise dargestellt ist. Der Passagiersitz 10a umfasst einen Sitzboden 12a, der eine Sitzfläche für einen Passagier bereitstellt. Der Passagiersitz 10a ist dazu vorgesehen, in einem Transportmittel montiert zu werden. Dazu weist der Passagiersitz 10a eine Aufständereinheit 14a auf. Mittels der Aufständereinheit 14a ist der Passagiersitz 10a fest auf einem Boden angeordnet. Der Boden bildet eine Aufständerebene für den Passagiersitz 10a aus. Der Aufständereinheit weist ein erstes vorderes Querelement 16a und ein zweites hinteres Querelement auf. Die Querelemente 16a sind als Tragrohre ausgebildet. Der Passagiersitz 10a ist vorzugsweise als ein Teil einer nicht näher dargestellten Sitzreihe ausgebildet. Die Sitzreihe umfasst dabei zwei oder mehr Passagiersitze, die nebeneinander angeordnet sind. Die Querelemente 16a erstrecken sich quer unter den Passagiersitzen 10a der Sitzreihe. Grundsätzlich ist es auch denkbar, dass die Sitzreihe eine andere Anzahl an Passagiersitzen 10a aufweist oder als ein Einzelsitz ausgebildet ist. Die Aufständereinheit 14a weist vorzugsweise zwei Sitzfüße 18a auf. Über die Sitzfüße 18a ist die Aufständereinheit 14a, vorzugsweise mittels entsprechenden Fittingen auf dem Boden aufgeständert. Die Querelemente 16a sind mit den Sitzfüßen 18a der Aufständereinheit 14a verbunden. Der Passagiersitz 10a ist vorzugsweise als ein Flugzeugsitz ausgebildet. Der als Flugzeugsitz ausgebildete Passagiersitz 10a ist dazu vorgesehen, in einer Flugzeugkabine auf einem Kabinenboden aufgeständert zu werden.

Der Passagiersitz 10a weist ein Beinabstützmodul 20a auf. Das Beinabstützmodul 20a ist dazu vorgesehen, dass ein auf dem Passagiersitz 10a sitzender Passagier seine Beine und/oder seine Füße darauf ablegen kann. Das Beinabstützmodul 20a ist an der Aufständereinheit 14a des Passagiersitzes 10a angebunden. Das Beinabstützmodul 20a ist vorzugsweise an dem vorderen Querelement 16a der Aufständereinheit 14a angebracht. Das Beinabstützmodul 20a ist direkt an die Aufständereinheit 14a angebunden. Das Beinabstützmodul 20a umfasst ein Beinabstützelement 22a. Grundsätzlich ist es auch denkbar, dass das Beinabstützmodul 20a mehrere Beinabstützelemente 22a umfasst. Das Beinabstützelement 22a bildet eine Abstützfläche 24a aus, die dazu vorgesehen ist, dass ein auf dem Passagiersitz 10a sitzender Passagier sein Bein und/oder seinen Fuß darauf ablegen kann.

Das Beinabstützmodul 20a weist einen Grundträger 26a auf. Der Grundträger 26a ist als eine Grundplatte des Beinabstützmoduls 20a ausgebildet. Der Grundträger 26a bildet eine Montageplatte des Beinabstützmoduls 20a aus. Das Beinabstützelement 22a ist an dem Grundträger 26a des Beinabstützmoduls 20a befestigt. Das Beinabstützelement 22a ist auf einer Vorderseite des Grundträgers 26a angebunden. Über den Grundträger 26a ist das Beinabstützmodul 20a schwenkbar an der Aufständereinheit 14a angebunden. Der Grundträger 26a weist an einem ersten Ende eine Lageraufnahme 28a auf. Die Lageraufnahme 28a ist von zumindest einem Durchgangsloch, vorzugsweise von zwei fluchtend angeordneten Durchgangslöchern ausgebildet.

Zur Lagerung des Beinabstützmoduls 20a weist die Passagiersitzvorrichtung ein Lagermodul 29a auf. Das Lagermodul 29a ist zu einer schwenkbaren Lagerung des Beinabstützmoduls 20a an der Aufständereinheit 14a vorgesehen. Das Lagermodul 29a weist einen Lagerbock 30a auf. Der Lagerbock 30a ist zur Anbindung des Beinabstützmoduls 20a an die Aufständereinheit 14a vorgesehen. Der Lagerbock 30a ist zur Anbindung an das vordere Querelement 16a vorgesehen. Der Lagerbock 30a ist zur direkten Anbindung an das vordere Querelement 16a vorgesehen. Zur Anbindung an das vordere Querelement 16a weist der Lagerbock 30a einen Aufnahmebereich 32a auf. Über den Aufnahmebereich 32a ist der Lagerbock 30a form- und/oder kraftschlüssig mit dem vorderen Querelement 16a verbunden. Der Lagerbock 30a weist zwei Lageraufnahmen 34a auf. Die Lageraufnahmen 34a sind koaxial zueinander angeordnet. Die Lageraufnahmen 34a sind als Durchgangslöcher ausgebildet, die fluchtend zueinander angeordnet sind. Der Lagerbock 30a weist zwei Befestigungsdome 36a auf, in denen die Lageraufnahmen 34a angeordnet sind. Die Befestigungsdome 36a und damit die Lageraufnahmen 34a sind in einem oberen Bereich des Lagerbocks 30a angeordnet. Der Lagerbock 30a weist zwei weitere Befestigungsdome 38a auf. Die zwei weiteren Befestigungsdome 38a sind in einem unteren Bereich des Lagermoduls 29a angeordnet.

Die weiteren Befestigungsdome 38a sind zur Ausbildung einer Aktuatoranbindung vorgesehen. Das Lagermodul 29a weist zur schwenkbaren Lagerung des Beinabstützmoduls 20a ein Lagerelement 40a auf. Das Lagerelement 40a ist als Lagerbolzen ausgebildet. Das Lagerelement 40a verbindet den Grundträger 26a über seine Lageraufnahmen 28a mit den Lageraufnahmen 34a des Lagerbocks 30a. Über das als Lagerbolzen ausgebildete Lagerelement 40a ist der Grundträger 26a und damit das Beinabstützmodul 20a schwenkbar zu dem Lagerbock 30a und damit der Aufständereinheit 14a gelagert.

Das Beinabstützmodul 20a ist zwischen einer Verstaustellung und einer maximal ausgelenkten Stellung verstellbar. In seiner Verstaustellung ist das Beinabstützmodul 20a an die Aufständereinheit 14a angeklappt. In der Verstaustellung ist das Beinabstützmodul 20a möglichst platzsparend an der Aufständereinheit 14a angeordnet. In der Verstaustellung ist das Beinabstützmodul 20a mit seinem Beinabstützelement 22a nach unten gerichtet. In der Verstaustellung des Beinabstützmoduls 20a ist das Beinabstützelement 22a mit seiner Abstützfläche 24a im Wesentlichen senkrecht ausgerichtet. In der Verstaustellung ist das Beinabstützelement 22a nicht dazu vorgesehen, dass ein Passagier seine Beine darauf ablegen kann. In seiner maximal ausgelenkten Stellung ist das Beinabstützelement 22a mit seiner Abstützfläche 24a in einem Winkel von ca. 75° zu der Sitzfläche des Sitzbodens 12a ausgerichtet. Dadurch kann eine besonders komfortable Abstützung der Beine des Passagiers erfolgen. Grundsätzlich wäre es auch denkbar, dass das Beinabstützelement 22a mit seiner Abstützfläche 24a in seiner maximal ausgelenkten Stellung im Wesentlichen parallel zu einer Sitzfläche des Sitzbodens 12a ausgerichtet ist. Durch die parallele Ausrichtung des Beinabstützelements 22a zu dem Sitzboden 12a kann das Beinabstützmodul 20a besonders vorteilhaft als eine Sitzbodenverlängerung ausgebildet werden, durch die die Sitzfläche des Sitzbodens 12a nach vorne erweitert werden kann. Das Beinabstützmodul 20a ist in der Verstaustellung und in der maximal ausgelenkten Stellung verriegelbar. Das Beinabstützmodul 20a ist zwischen einer Verstaustellung und der maximal ausgelenkten Stellung stufenlos in beliebigen Stellungen verriegelbar.

Die Passagiersitzvorrichtung weist einen Aktuator 42a auf. Der Aktuator 42a ist dazu vorgesehen, eine Verstellkraft auf das Beinabstützmodul 20a auszuüben. Der Aktuator 42a ist in einem betätigten Zustand dazu vorgesehen, eine Verstellkraft auf das Beinabstützmodul 20a auszuüben. Der Aktuator 42a ist dazu vorgesehen, das Beinabstützmodul 20a in einer aktuellen Stellung zu verriegeln. Der Aktuator 42a ist dazu vorgesehen, in einem unbetätigten Zustand das Beinabstützmodul 20a in seiner aktuellen Stellung zu verriegeln. Der Aktuator 42a ist zwischen der Aufständereinheit 14a und dem Beinabstützmodul 20a angeordnet. Der Aktuator 42a ist funktional zwischen dem Lagerbock 30a und dem Grundträger 26a des Beinabstützmoduls 20a angeordnet. Der Aktuator 42a weist ein erstes Ende auf, an dem der Aktuator 42a ein erstes Anbindungselement ausbildet. An dem ersten Ende ist der Aktuator 42a über sein erstes Anbindungselement mit dem Lagerbock 30a gekoppelt. Das erste Anbindungselement ist als eine Anbindungsaufnahme ausgebildet. Der Aktuator 42a weist ein zweites Ende auf, an dem der Aktuator 42a ein zweites Anbindungselement ausbildet. An dem zweiten Ende ist der Aktuator 42a mit seinem zweiten Anbindungselement mit dem Grundträger 26a des Beinabstützmoduls 20a verbunden. Das zweite Anbindungselement ist als eine Anbindungsaufnahme ausgebildet. Der Aktuator 42a bildet eine Verstellachse aus. Entlang der Verstellachse ist der Aktuator 42a dazu vorgesehen, eine als Druckkraft ausgebildete Verstellkraft zwischen seinen Anbindungselementen bereitzustellen. Der Aktuator 42a ist als eine Druckfeder ausgebildet. Der Aktuator 42a ist als eine Gasdruckfeder ausgebildet. Der Aktuator 42a weist einen Gaszylinder und eine in dem Gaszylinder verschiebbar gelagerte Kolbenstange auf. Das erste Anbindungselement des Aktuators 42a ist an dem Gaszylinder angeordnet. Das zweite Anbindungselement des Aktuator 42a ist an der Kolbenstange angeordnet. Der Aktuator 42a weist einen Betätigungspin auf. Der Betätigungspin ist dazu vorgesehen, den Aktuator 42a zwischen einem unbetätigten Zustand und einem betätigten Zustand zu verstellen. Zur Betätigung des Aktuators 42a muss der Betätigungspin betätigt werden. Durch Betätigung des Betätigungspins wird der Aktuator 42a von einem unbetätigten Zustand in seinen betätigten Zustand verstellt. Der Betätigungspin muss zur Betätigung um einen Betätigungsweg von 0,5 mm betätigt werden. Dabei muss vorzugsweise eine Betätigungskraft von 30 N auf den Betätigungspin ausgeübt werden. In einem unbetätigten Zustand des Betätigungspins ist der Aktuator 42a in einem betätigten Zustand verriegelt. Der Aktuator 42a weist eine Überlastkraft auf, bei der eine innere Verriegelung des Aktuators 42a aufgehoben wird. Wird eine Zugkraft entlang der Verstellachse auf den Aktuator 42a ausgeübt, die größer ist als seine Überlastkraft, wird der Aktuator 42a entlang seiner Verstellachse gelängt, also seine Anbindungselemente werden auseinandergezogen. Die Überlastkraft des Aktuators 42a beträgt 1800 N.

Die Passagiersitzvorrichtung weist ein Befestigungselement 46a auf. Das Befestigungselement 46a ist dazu vorgesehen, den Aktuator 42a an die Aufständereinheit 14a anzubinden. Das Befestigungselement 46a dazu vorgesehen, den Aktuator 42a mit seinem ersten Anbindungselement formschlüssig an den Lagerbock 30a anzubinden. Zur Anbindung des Aktuators 42a weist der Lagerbock 30a zwei Aufnahmen 48a auf. Die Aufnahmen 48a sind von zwei Durchgangslöchern in den Befestigungsdomen 38a des Lagerbocks 30a ausgebildet. In einem montierten Zustand ist das Befestigungselement 46a formschlüssig in den Aufnahmen 48a des Lagerbocks 30a angeordnet. Das Befestigungselement 46a ist in dem montierten Zustand formschlüssig mit dem Anbindungselement des Aktuators 42a verbunden. Das Befestigungselement 46a ist als ein Befestigungsbolzen ausgebildet.

Die Passagiersitzvorrichtung weist ein Überlastverriegelungsmodul 44a auf. Das Überlastverriegelungsmodul 44a ist dazu vorgesehen, das Beinabstützmodul 20a in einem Überlastfall mechanisch zu verriegeln. Ein Überlastfall ist als ein Zustand ausgebildet, in dem der Aktuator 42a entlang seiner Verstellachse mit einer Zugkraft beaufschlagt ist, die größer ist als seine Überlastkraft. Der Überlastfall kann beispielsweise durch Verzögerungskräfte, die während eines Crashtests oder eines Unfalls auf die Passagiersitzvorrichtung wirken, auftreten. Ein Überlastfall kann ebenfalls durch eine händische Aufbringung einer Zugkraft auf den Aktuator 42a auftreten, in dem beispielsweise ein Passagier das Beinabstützmodul 20a händisch verstellen will, ohne den Aktuator 42a zu betätigen. Das Überlastverriegelungsmodul 44a ist dazu vorgesehen, das Beinabstützmodul 20a in einem Überlastfall formschlüssig zu verriegeln. Das Überlastverriegelungsmodul 44a ist dazu vorgesehen, eine Verschwenkung des Beinabstützmoduls 20a auf eine Überlast-Verschwenkung zu beschränken. Die Überlast-Verschwenkung beträgt maximal 15°. Besonders bevorzugt beträgt die Überlast-Verschwenkung maximal 10°. In einer besonders bevorzugten Ausgestaltung beträgt die Überlastlast-Verschwenkung maximal 5°. Das Überlastverriegelungsmodul 44a ist dazu vorgesehen, eine Detektion des Überlastfalls rein mechanisch durchzuführen. Die Detektion des Überlastfalls erfolgt rein mechanisch. Insbesondere erfolgt eine Detektion des Überlastfalls ohne einen elektrischen oder elektronischen Sensor. Das Überlastverriegelungsmodul 44a ist dazu vorgesehen, ein Trägheitsmoment des Beinabstützmoduls 20a oder eine Krafteinwirkung, insbesondere eine Einwirkung einer Zugkraft, auf den Aktuator 42a in eine Verstellkraft zur Verriegelung des Überlastverriegelungsmoduls 44a umzuwandeln.

Das Überlastverriegelungsmodul 44a weist ein mit dem Aktuator 42a gekoppeltes Sperrelement 50a auf. Das Sperrelement 50a ist dazu vorgesehen, zur Verriegelung des Überlastverriegelungsmoduls 44a in einem Überlastfall aus seiner Normalposition in eine Sperrposition verstellt zu werden. Das Sperrelement 50a ist dazu vorgesehen, durch eine auf den Aktuator 42a ausgeübte Zugkraft in dessen Verstellachse, von seiner Normalposition in eine Sperrposition verstellt zu werden. In seiner Normalposition ist das Sperrelement 50a dazu vorgesehen, eine Schwenkbewegung des Beinabstützmoduls 20a nicht zu verhindern. In seiner Normalposition gibt das Sperrelement 50a eine Verschwenkbewegung des Beinabstützmoduls 20a frei. In seiner Sperrposition ist das Sperrelement 50a dazu vorgesehen, eine Verschwenkung des Beinabstützmoduls 20a auf die Überlast-Verschwenkung zu begrenzen. In seiner Sperrposition ist das Sperrelement 50a dazu vorgesehen, nach einer Verschwenkung des Beinabstützmoduls 20a um seine Überlast-Verschwenkung das Beinabstützmodul 20a durch einen formschlüssigen Kontakt zu sperren.

Das Sperrelement 50a ist einstückig mit dem Befestigungselement 46a zur Anbindung des Aktuators 42a ausgebildet. Das Sperrelement 50a ist von dem als Lagerbolzen ausgebildeten Befestigungselement 46a ausgebildet. Die Aufnahme 48a des Überlastverriegelungsmoduls 44a zur Befestigung des Befestigungselements 46a ist von zwei Langlöchern ausgebildet. In jedem der Befestigungsdome 38a ist jeweils eine als Langloch ausgebildete Aufnahme 48a angeordnet. Durch die Ausbildung der Aufnahmen 48a als Langloch ist der Aktuator 42a beweglich an dem Lagerbock 30a gelagert. Die als Langloch ausgebildeten Aufnahmen 48a weisen eine Längserstreckung auf. Die Längserstreckung der als Langloch ausgebildeten Aufnahmen 48a bildet eine Verstellstrecke des einstückig mit dem Befestigungselement 46a ausgebildeten Sperrelements 50a aus. Die Verstellstrecke des einstückig mit dem Befestigungselement 46a ausgebildeten Sperrelements 50a beträgt vorzugsweise zwischen 3 und 10 mm. Die Verstellstrecke beträgt in einer besonders bevorzugten Ausgestaltung 5, 5 mm Grundsätzlich wäre es auch denkbar, dass die Verstellstrecke zumindest 10 mm beträgt. Die Verstellstrecke ist durch die Längserstreckung der als Langloch ausgebildeten Aufnahmen 48a gegeben. Die als Langloch ausgebildeten Aufnahmen 48a weisen ein erstes, oberes Ende auf. Das obere Ende der als Langloch ausgebildeten Aufnahmen 48a ist dem Querelement 16a zugewandt. Die als Langloch ausgebildeten Aufnahmen 48a weisen ein zweites unteres Ende auf. Das untere Ende der als Langloch ausgebildeten Aufnahmen 48a ist dem Aktuator 42a, bzw. einem Boden zugewandt. In seiner Normalstellung ist das einstückig mit dem Befestigungselement 46a ausgebildete Sperrelement 50a an dem ersten, oberen Ende der als Langloch ausgebildeten Aufnahmen 48a angeordnet. In seiner Sperrstellung ist das einstückig mit dem Befestigungselement 46a ausgebildete Sperrelement 50a an dem zweiten, unteren Ende der als Langloch ausgebildeten Aufnahmen 48a angeordnet.

Das Überlastverriegelungsmodul 44a weist ein Formschlusselement 52a auf. Das Formschlusselement 52a ist mit dem Beinabstützmodul 20a gekoppelt. Das Formschlusselement 52a ist dazu vorgesehen, eine Verriegelung des Überlastverriegelungsmoduls 44a in einem Überlastfall an dem Sperrelement 50a, das sich in seiner Sperrposition befindet, anzuschlagen. Das Formschlusselement 52a ist dazu vorgesehen, so eine Verriegelung des Überlastverriegelungsmoduls 44a in einem Überlastfall an dem einstückig mit dem Sperrelement 50a ausgebildeten Befestigungselement 46a anzuschlagen. Das Formschlusselement 52a ist mit dem Grundträger 26a des Beinabstützmoduls 20a gekoppelt. Das Formschlusselement 52a ist einstückig mit dem Grundträger 26a des Beinabstützmoduls 20a verbunden. Das Formschlusselement 52a ist von einem Teil des Grundträgers 26a des Beinabstützmoduls 20a gebildet. Das Formschlusselement 52a ist auf einer Rückseite des Grundträgers 26a, die dem Beinabstützelement 22a abgewandt ist, angeordnet. Das Formschlusselement 52a ist als ein Hakenelement ausgebildet. Das als Hakenelement ausgebildete Formschlusselement 52a erstreckt sich von der Rückseite des Grundträgers 26a weg. An einem dem Grundträger 26a abgewandten Ende ist das Formschlusselement 52a abgewinkelt ausgebildet. Das Formschlusselement 52a weist an dem, dem Grundträger 26a abgewandten Ende einen abgewinkelten Endbereich 54a auf. Das als Hakenelement ausgebildete Formschlusselement 52a ist an dem, dem Grundträger 26a abgewandten Ende in Richtung der Lageraufnahmen 28a abgewinkelt. Der abgewinkelte Endbereich 54a des Formschlusselements 52a bildet eine Kontaktfläche des Formschlusselements 52a aus, die dazu vorgesehen ist, zur Verriegelung des Beinabstützmoduls 20a in einen formschlüssigen Kontakt mit dem als Sperrelement 50a ausgebildeten Befestigungselement 46a zu kommen.

Das Überlastverriegelungsmodul 44a weist ein Federmodul 56a auf. Das Federmodul 56a ist dazu vorgesehen, eine Federkraft auf das Sperrelement 50a auszuüben, welche dazu vorgesehen ist, das Sperrelement 50a in einem Normalbetriebszustand in seiner Normalstellung zu halten. Das Federmodul 56a ist funktionstechnisch zwischen dem Sperrelement 50a und der Aufständereinheit 14a angeordnet. Das Federmodul 56a ist zwischen dem Befestigungselement 46a für den Aktuator 42a und die Aufständereinheit 14a angeordnet. Das Federmodul 56a ist zwischen dem Befestigungselement 46a für den Aktuator 42a und den Lagerbock 30a angeordnet. Das Federmodul 56a ist mit einem ersten Ende an dem Lagerbock 30a angebunden. Der Lagerbock 30a weist eine Befestigungsaufnahme für das Federmodul 56a auf. Das Federmodul 56a ist an einem zweiten Ende mit dem Befestigungselement 46a für den Aktuator 42a verbunden. Das Federmodul 56a ist direkt mit dem Befestigungselement 46a verbunden. Das Federmodul 56a weist eine Befestigungsaufnahme auf, mit der das Federmodul 56a an das Befestigungselement 46a angebunden ist. Das Federmodul 56a ist als ein Zugfedermodul ausgebildet. Das Federmodul 56a ist dazu vorgesehen, eine als Zugkraft ausgebildete Federkraft bereitzustellen. Das Federmodul 56a weist zwei Federelemente 58a, 60a auf. Grundsätzlich wäre es auch denkbar, dass das Federmodul 56a lediglich ein Federelement 58a, 60a aufweist, oder eine andere Anzahl. Die Federelemente 58a, 60a sind als Spiralfedern ausgebildet. Die Federelemente 58a, 60a sind als Zugfedern ausgebildet.

Das Federmodul 56a ist dazu vorgesehen, eine als Zugfederkraft ausgebildete Federkraft auf das Sperrelement 50a auszuüben, und dieses so in seine Normalstellung zu ziehen. Die Überlastkraft des Aktuators 42a ist zumindest doppelt so groß wie die Federkraft des Federmoduls 56a. Vorzugsweise ist die Überlastkraft des Aktuators 42a dreimal so groß wie die Federkraft des Federmoduls 56a. Die Federkraft des Federmoduls 56a beträgt maximal 900 N. Besonders bevorzugt weist das Federmodul 56a eine Federkraft von maximal 500 N auf. Dadurch, dass die Federkraft des Federmoduls 56a wesentlich kleiner ist als die Überlastkraft des Aktuators 42a, wird das Sperrelement 50a bei einer Zugkrafteinwirkung auf den Aktuator 42a aus seiner Normalstellung in seine Sperrstellung verschoben, bevor die auf den Aktuator 42a wirkende Kraft dessen Überlastkraft übersteigt. Dadurch wird in einem Überlastfall zunächst das Sperrelement 50a in seine Sperrstellung verstellt, bevor der Aktuator 42a wegen der auf ihn wirkenden Kraft, die dessen Überlastkraft übersteigt, gedehnt wird. Erhöht sich die auf den Aktuator 42a wirkende Kraft soweit, dass sie dessen Überlastkraft übersteigt, wird der Aktuator 42a entlang seiner Verstellachse gelängt, wodurch das Beinabstützmodul 20a über das Lagermodul 29a von seiner aktuellen Stellung, in Richtung seiner maximal verstellten Stellung verschwenkt wird. Das Beinabstützmodul 20a wird um die Überlast-Verschwenkung um die Schwenkachse des Lagermoduls 29a verschwenkt und schlägt dann mit dem Formschlusselement 52a des Überlastverriegelungsmoduls 44a an dem als Sperrelement 50a ausgebildeten Befestigungselement 46a für den Aktuator 42a an. Dadurch wird eine Verschwenkung des Beinabstützmoduls 20a auf die Überlast-Verschwenkung begrenzt. Das Beinabstützmodul 20a ist in dem Überlastfall durch das Überlastverriegelungsmodul 44a mechanisch verriegelt. Durch die mechanische Verriegelung des Beinabstützmoduls 20a mittels der formschlüssigen Kopplung zwischen dem Formschlusselement 52a und dem als Sperrelement 50a ausgebildeten Befestigungselement 46a kann ein komplettes Aufschwenken des Beinabstützmoduls 20a bis in seine maximal verstellte Stellung verhindert werden. Dadurch kann insbesondere verändert werden, dass das Beinabstützmodul 20a in einem Überlastfall in einen Fluchtweg vor den Passagiersitz aufgeschwenkt wird. Die in dem Überlastfall auf den Aktuator 42a wirkende Zugkraft kann dabei sowohl durch Verzögerung während eines Crashs oder Crashtests hervorgerufen werden, als auch durch eine händische Verstellung des Beinabstützmoduls 20a durch eine Person.

Das Federmodul 56a ist dazu vorgesehen, das Beinabstützmodul 20a nach einer erfolgten Verriegelung nach Wegfall einer Überlastkraft wieder in seine Verstaustellung zu verstellen. Nachdem die auf den Aktuator wirkende Zugkraft, die größer ist als eine Überlastkraft, weggefallen ist, zieht das Federmodul 56a durch seine Zugkraft das als Sperrelement 50a ausgebildete Befestigungselement 46a wieder in seine Normalstellung. Dadurch wird das Beinabstützmodul 20a wieder in seine Verstaustellung zurück bewegt.

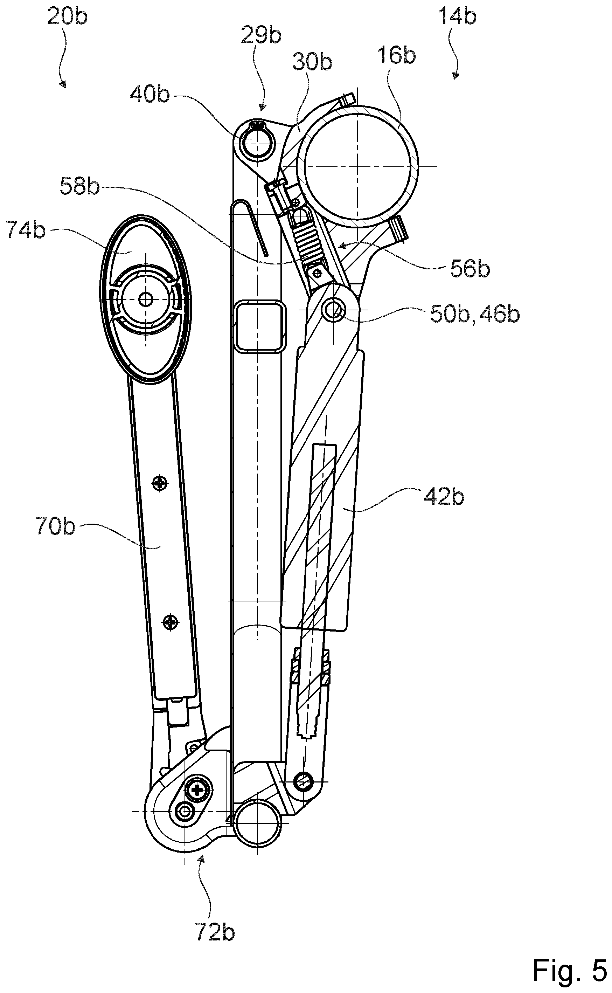

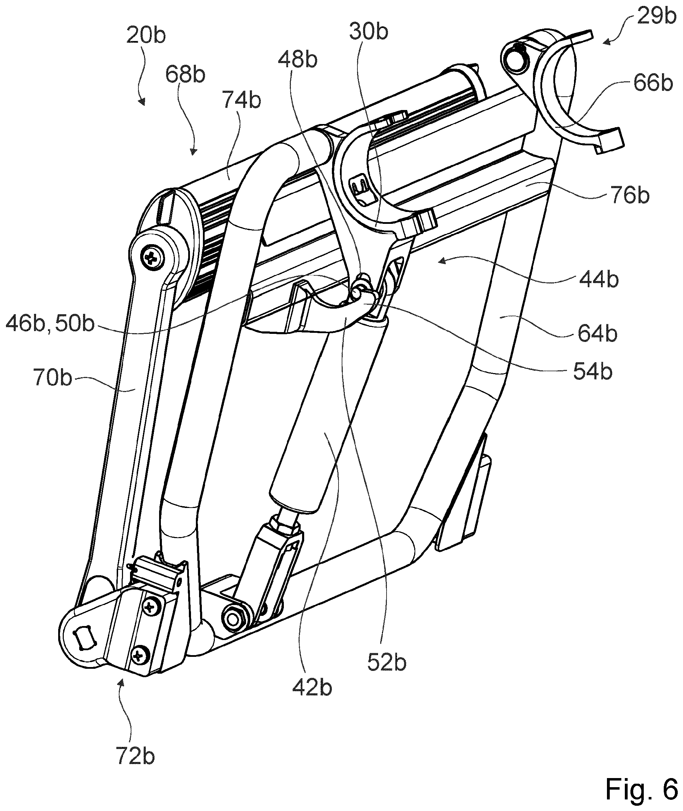

In Figuren 5 und 6 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Fig. 1 bis 4, verwiesen werden kann. Zur Unterscheidung der Ausführungsbeispiele ist der Buchstabe a den Bezugszeichen des Ausführungsbeispiels in Fig. 1 bis 4 nachgestellt. In dem Ausführungsbeispiel der Fig. 5 und 6 ist der Buchstabe a durch den Buchstaben b ersetzt.

Die Figuren 5 und 6 zeigen eine erfindungsgemäße Passagiersitzvorrichtung in einem zweiten Ausführungsbeispiel. Ein Passagiersitz 10b ist dazu vorgesehen, in einem Transportmittel montiert zu werden. Dazu weist der Passagiersitz 10b eine Aufständereinheit 14b auf. Der Passagiersitz 10b ist vorzugsweise als ein Zugsitz ausgebildet. Grundsätzlich ist es auch denkbar, dass den Passagiersitz 10b als ein Flugzeugsitz ausgebildet ist. Der Passagiersitz 10b weist die Aufständereinheit 14b auf. Die Aufständereinheit 14b weist ein erstes vorderes Querelement 16b und ein zweites hinteres Querelement auf. Die Querelemente 16b sind als Tragrohre ausgebildet. Die Querelemente 16b erstrecken sich quer unter den Passagiersitzen 10b der Sitzreihe. Der Passagiersitz 10b weist ein Beinabstützmodul 20b auf. Das Beinabstützmodul 20b ist dazu vorgesehen, schwenkbar an der Aufständereinheit 14b angebunden zu werden. Das Beinabstützmodul 20b ist dazu vorgesehen, an dem vorderen Querelement 16b der Aufständereinheit 14b angebunden zu werden. Das Beinabstützmodul 20b weist einen Grundrahmen 64b auf. Der Grundrahmen 64b ist schwenkbar zu der Aufständereinheit 14b angeordnet.

Zur Lagerung des Beinabstützmoduls 20b weist die Passagiersitzvorrichtung ein Lagermodul 29b auf. Das Lagermodul 29b weist einen ersten Lagerbock 30b und einen zweiten Lagerbock 66b auf. Die Lagerböcke 30b, 66b sind zur Anbindung des Beinabstützmoduls 20b an die Aufständereinheit 14b vorgesehen. Die Lagerböcke 30b, 66b sind zur Anbindung an das vordere Querelement 16b vorgesehen. Die Lagerböcke 30b, 66b sind zur direkten Anbindung an das vordere Querelement 16b vorgesehen. Zur Anbindung an das vordere Querelement 16b weisen die Lagerböcke 30b, 66b jeweils einen Aufnahmebereich auf. Über die Aufnahmebereiche sind die Lagerböcke 30b, 66b form- und/oder kraftschlüssig mit dem vorderen Querelement 16b verbunden.

Die Lagerböcke 30b, 66b weisen jeweils eine Lageraufnahme auf, über die das Beinabstützmodul 20b an die Lagerböcke 30b, 66b angebunden ist. Der Grundrahmen 64b ist über die Lageraufnahmen der Lagerböcke 30b, 66b schwenkbar an die Aufständereinheit 14b angebunden. Die Lagerböcke 30b, 66b sind jeweils in Seitenbereichen des Grundrahmens 64b angeordnet.

Das Beinabstützmodul 20b weist im Unterschied zu dem ersten Ausführungsbeispiel ein Fußabstützmodul 68b auf. Das Fußabstützmodul 68b ist an einem unteren Ende des Grundrahmens 64b des Beinabstützmoduls 20b angebunden. Das Fußabstützmodul 68b ist schwenkbar an dem Grundrahmen 64b angebunden. Das Fußabstützmodul 68b weist zwei schwenkbare Haltearme 70b auf, die über ein Anbindungselement 72b schwenkbar an dem Grundrahmen 64b des Beinabstützmoduls 20b angebunden sind. Das Fußabstützmodul 68b weist ein Fußabstützelement 74b auf. Das Fußabstützelement 74b ist drehbar an vorderen Enden der Haltearme 70b angebunden. Das Fußabstützelement 74b ist dazu vorgesehen, dass ein auf dem Passagiersitz sitzender Passagier seinen Fuß darauf abstellen kann. Das Beinabstützmodul 20b bildet im Bereich des Grundrahmens 64b ein Beinabstützelement 22b aus. Dazu ist der Grundrahmen 64b vorzugsweise mit einer Bespannung versehen, die nicht näher dargestellt ist. Auf der Bespannung des Grundrahmens 64b ist vorzugsweise ein Polsterelement angeordnet, das eine Auflagefläche des Beinabstützelements 22b ausbildet.

Das Beinabstützmodul 20b ist zwischen einer Verstaustellung und einer maximal ausgelenkten Stellung verstellbar. In seiner Verstaustellung ist das Beinabstützmodul 20b an die Aufständereinheit 14b angeklappt. Die Passagiersitzvorrichtung weist einen Aktuator 42b auf. Aufgrund des zum ersten Ausführungsbeispiel zusätzlichen Fußabstützmoduls 68b muss der Aktuator 42b stärker ausgebildet sein als der des ersten Ausführungsbeispiels. Der Aktuator 42b ist dazu vorgesehen, eine Verstellkraft auf das Beinabstützmodul 20b auszuüben. Der Aktuator 42b ist in einem betätigten Zustand dazu vorgesehen, eine Verstellkraft auf das Beinabstützmodul 20b auszuüben. Der Aktuator 42b ist dazu vorgesehen, das Beinabstützmodul 20b in einer aktuellen Stellung zu verriegeln. Der Aktuator 42b ist dazu vorgesehen, in einem unbetätigten Zustand das Beinabstützmodul 20b in seiner aktuellen Stellung zu verriegeln. Der Aktuator 42b ist zwischen der Aufständereinheit 14b und dem Beinabstützmodul 20b angeordnet. Der Aktuator 42b ist funktional zwischen dem Lagerbock 30b und dem Grundrahmen 64b des Beinabstützmoduls 20b angeordnet. Der Aktuator 42b ist als eine Druckfeder ausgebildet. Der Aktuator 42b ist als eine Gasdruckfeder ausgebildet.

Die Passagiersitzvorrichtung weist ein Befestigungselement 46b auf. Das Befestigungselement 46b ist dazu vorgesehen, den Aktuator 42b an die Aufständereinheit 14b anzubinden. Das Befestigungselement 46b dazu vorgesehen, den Aktuator 42b mit seinem ersten Anbindungselement formschlüssig an den Lagerbock 30b anzubinden. Das Befestigungselement 46b ist als ein Befestigungsbolzen ausgebildet.

Die Passagiersitzvorrichtung weist ein Überlastverriegelungsmodul 44b auf. Das Überlastverriegelungsmodul 44b ist dazu vorgesehen, das Beinabstützmodul 20b in einem Überlastfall mechanisch zu verriegeln. Ein Überlastfall ist als ein Zustand ausgebildet, in dem der Aktuator 42b entlang seiner Verstellachse mit einer Zugkraft beaufschlagt ist, die größer ist als seine Überlastkraft. Das Überlastverriegelungsmodul 44b ist dazu vorgesehen, eine Verschwenkung des Beinabstützmoduls 20b auf eine Überlast-Verschwenkung zu beschränken. Das Überlastverriegelungsmodul 44b weist ein mit dem Aktuator 42b gekoppeltes Sperrelement 50b auf. Das Sperrelement 50b ist dazu vorgesehen, zur Verriegelung des Überlastverriegelungsmoduls 44b in einem Überlastfall aus seiner Normalposition in eine Sperrposition verstellt zu werden. Das Sperrelement 50b ist dazu vorgesehen, durch eine auf den Aktuator 42b ausgeübte Zugkraft in dessen Verstellachse, von seiner Normalposition in eine Sperrposition verstellt zu werden. Das Sperrelement 50b ist einstückig mit dem Befestigungselement 46b zur Anbindung des Aktuators 42b ausgebildet. Das Sperrelement 50b ist von dem als Lagerbolzen ausgebildeten Befestigungselement 46b ausgebildet.

Das Überlastverriegelungsmodul 44b weist ein Formschlusselement 52b auf. Das Formschlusselement 52b ist mit dem Beinabstützmodul 20b gekoppelt. Das Formschlusselement 52b ist dazu vorgesehen, eine Verriegelung des Überlastverriegelungsmoduls 44b in einem Überlastfall an dem Sperrelement 50b, das sich in seiner Sperrposition befindet, anzuschlagen. Das Formschlusselement 52b ist an dem Grundrahmen 64b des Beinabstützmoduls 20b angebunden. Der Grundrahmen 64b weist einen als Torsionselement ausgebildeten Querträger 76b auf. Das Formschlusselement 52b ist an dem Querträger 76b angebunden. Das Formschlusselement 52b ist vorzugsweise mit dem Querträger 76b stoff- oder formschlüssig verbunden. Grundsätzlich ist es auch denkbar, dass das Formschlusselement 52b einstückig mit dem Querträger 76b ausgebildet ist. Das Formschlusselement 52b ist dazu vorgesehen, so eine Verriegelung des Überlastverriegelungsmoduls 44b in einem Überlastfall an dem einstückig mit dem Sperrelement 50b ausgebildeten Befestigungselement 46b anzuschlagen.

Das Überlastverriegelungsmodul 44b weist ein Federmodul 56b auf. Das Federmodul 56b ist dazu vorgesehen, eine Federkraft auf das Sperrelement 50b auszuüben, welche dazu vorgesehen ist, das Sperrelement 50b in einem Normalbetriebszustand in seiner Normalstellung zu halten. Das Federmodul 56b ist funktionstechnisch zwischen dem Sperrelement 50b und der Aufständereinheit 14b angeordnet. Das Federmodul 56b ist zwischen dem Befestigungselement 46b für den Aktuator 42b und der Aufständereinheit 14b angeordnet. Das Federmodul 56b ist dazu vorgesehen, eine als Zugfederkraft ausgebildete Federkraft auf das Sperrelement 50b auszuüben, und dieses so in seine Normalstellung zu ziehen. Die Überlastkraft des Aktuators 42b ist zumindest doppelt so groß wie die Federkraft des Federmoduls 56b. Vorzugsweise ist die Überlastkraft des Aktuators 42b dreimal so groß wie die Federkraft des Federmoduls 56b. Das Federmodul 56b weist in dem Ausführungsbeispiel lediglich ein Federelement 58b auf.

Die Funktion des Überlastverriegelungsmoduls 44b entspricht dem des ersten Ausführungsbeispiels und soll deshalb hier nicht nochmals näher beschrieben werden. Eine Erläuterung der Funktion des Überlastverriegelungsmoduls 44b kann dem ersten Ausführungsbeispiel entnommen werden.

Grundsätzlich wäre es in einer anderen Ausgestaltung ebenfalls möglich, dass das Sperrelement 50b als ein von dem Befestigungselement 46b des Aktuators 42b getrennt ausgebildetem Element gebildet ist. Ebenso wäre es denkbar, dass das Sperrelement 50b mit dem Beinabstützmodul 20b verbunden ist. Grundsätzlich wäre es dabei denkbar, dass das Formschlusselement 52b mit dem Aktuator 42b gekoppelt ist.

**Bezugszeichen**

| | | | |
|---|---|---|---|
| 10 | Passagiersitz | 54 | Endbereich |
| 12 | Sitzboden | 56 | Federmodul |
| 14 | Aufständereinheit | 58 | Federelement |
| 16 | Querelement | 60 | Federelement |
| 18 | Sitzfuß | 64 | Grundrahmen |
| 20 | Beinabstützmodul | 66 | Lagerbock |
| 22 | Beinabstützelement | 68 | Fußabstützmodul |
| 24 | Abstützfläche | 70 | Haltearm |
| 26 | Grundträger | 72 | Anbindungselement |
| 28 | Lageraufnahme | 74 | Fußabstützelement |
| 29 | Lagermodul | 76 | Querträger |
| 30 | Lagerbock | | |
| 32 | Aufnahmebereich | | |
| 34 | Lageraufnahme | | |
| 36 | Befestigungsdom | | |
| 38 | Befestigungsdom | | |
| 40 | Lagerelement | | |
| 42 | Aktuator | | |
| 44 | Überlastverriegelungsmodul | | |
| 46 | Befestigungselement | | |
| 48 | Aufnahme | | |
| 50 | Sperrelement | | |
| 52 | Formschlusselement | | |

## Patentansprüche

1. Passagiersitzvorrichtung, mit einer Aufständereinheit (14a; 14b), mit einem Beinabstützmodul (20a; 20b), das an der Aufständereinheit (14a; 14b) schwenkbar gelagert ist, mit einem Lagermodul (29a; 29b), das dazu vorgesehen ist, das Beinabstützmodul (20a; 20b) zwischen einer Verstaustellung und einer maximal ausgelenkten Stellung zu verstellen, mit einem Aktuator (42a; 42b), der dazu vorgesehen ist, eine Verstellkraft auf das Beinstützmodul (20a; 20b) auszuüben, mit einem Überlastverriegelungsmodul (44a; 44b), das dazu vorgesehen ist, das Beinabstützmodul (20a; 20b) in einem Überlastfall mechanisch zu verriegeln, **dadurch gekennzeichnet, dass** das Überlastverriegelungsmodul (44a; 44b) dazu vorgesehen ist, das Trägheitsmoment des Beinabstützmoduls (20a; 20b) oder eine Krafteinwirkung auf den Aktuator (42a; 42b) in eine Verstellkraft zur Verriegelung des Überlastverriegelungsmoduls (44a; 44b) umzuwandeln.

2. Passagiersitzvorrichtung nach Anspruch 1, **dadurch gekennzeichnet, dass** eine Detektion des Überlastfalls rein mechanisch erfolgt.

3. Passagiersitzvorrichtung nach einem der vorhergehenden Ansprüche, **dadurch gekennzeichnet, dass** das Überlastverriegelungsmodul (44a; 44b) ein mit dem Aktuator (42a; 42b) gekoppeltes Sperrelement (50a; 50b) aufweist, das dazu vorgesehen ist, zur Verriegelung des Überlastverriegelungsmoduls (44a; 44b) in einem Überlastfall aus seiner Normalposition in eine Sperrposition verstellt zu werden.

4. Passagiersitzvorrichtung nach einem der vorhergehenden Ansprüche, **dadurch gekennzeichnet, dass** das Überlastverriegelungsmodul (44a; 44b) ein Formschlusselement (52a; 52b) aufweist, das mit dem Beinabstützmodul (20a; 20b) verbunden ist und dazu vorgesehen ist, zur Verriegelung des Überlastverriegelungsmoduls (44a; 44b) in einem Überlastfall an dem Sperrelement (50a; 50b), das sich in seiner Sperrposition befindet, anzuschlagen.

5. Passagiersitzvorrichtung nach einem der vorhergehenden Ansprüche, **gekennzeichnet durch** ein Befestigungselement (46a; 46b), das zur Anbindung des Aktuators (42a; 42b) an die Aufständereinheit (14a; 14b) vorgesehen ist, wobei das Befestigungselement das Sperrelement (50a; 50b) des Überlastverriegelungsmoduls (44a; 44b) ausbildet.

6. Passagiersitzvorrichtung nach Anspruch 5, **dadurch gekennzeichnet, dass** das Überlastverriegelungsmodul (44a; 44b) eine als Langloch ausgebildete Aufnahme (48a; 48b) aufweist, in der das Befestigungselement (46a; 46b) verschiebbar gelagert ist.

7. Passagiersitzvorrichtung nach Anspruch 3, **dadurch gekennzeichnet, dass** das Überlastverriegelungsmodul (44a; 44b) zumindest ein Federmodul (56a; 56b) aufweist, das dazu vorgesehen ist, eine Federkraft auf das Sperrelement (50a; 50b) auszuüben, welche dazu vorgesehen ist, das Sperrelement (50a; 50b) in einem Normalbetriebszustand in seiner Normalstellung zu halten.

8. Passagiersitzvorrichtung nach Anspruch 7, **dadurch gekennzeichnet, dass** der Aktuator (42a; 42b) eine Überlastkraft aufweist, die zumindest doppelt so groß ist wie eine Federkraft des Federmoduls (56a; 56b).

9. Passagiersitzvorrichtung zumindest nach Anspruch 6, **dadurch gekennzeichnet, dass** das Lagermodul (29a; 29b) einen Lagerbock (30a; 30b, 66b) aufweist, der zur Befestigung an der Aufständereinheit (14a; 14b) vorgesehen ist, und der die als Langloch ausgebildete Aufnahme (48a; 48b) ausbildet, die zur Anbindung des Befestigungselements (46a; 46b) vorgesehen ist.

10. Passagiersitzvorrichtung zumindest nach Anspruch 4, **dadurch gekennzeichnet, dass** das Beinabstützmodul (20a) einen Grundträger (26a) aufweist, der schwenkbar an der Aufständereinheit (14a) angebunden ist und der das Formschlusselement (52a) des Überlastungsverriegelungsmoduls (44a) ausbildet.

11. Passagiersitzvorrichtung nach Anspruch 7, **dadurch gekennzeichnet, dass** das Federmodul (56a; 56b) dazu vorgesehen ist, das Beinabstützmodul (20a; 20b) nach einer erfolgten Verriegelung nach Wegfall einer Überlastkraft wieder in seine Verstaustellung zu verstellen.

12. Passagiersitz, insbesondere Flugzeugsitz, mit einer Passagiersitzvorrichtung nach einem der vorhergehenden Ansprüche.

## Claims

1. Passenger seat device, having a mounting unit (14a; 14b), having a leg support module (20a; 20b) which is supported pivotably on the mounting unit (14a; 14b), having a bearing module (29a; 29b) which is configured to adjust the leg support module (20a; 20b) between a stowed position and a maximum deflected position, having an actuator (42a; 42b) which is configured to exert an adjusting force on the leg support module (20a; 20b), having an overload locking module (44a; 44b) which is configured to mechanically lock the leg support module (20a; 20b) in the event of an overload, **characterized in that** the overload locking module (44a; 44b) is configured to convert the moment of inertia of the leg support module (20a; 20b) or a force effect on the actuator (42a; 42b) into an adjusting force for locking the overload locking module (44a; 44b).

2. Passenger seat device according to claim 1, **characterized in that** the event of an overload is detected purely mechanically.

3. Passenger seat device according to one of the preceding claims, **characterized in that** the overload locking module (44a; 44b) has a blocking element (50a; 50b) which is coupled to the actuator (42a; 42b) and which is configured to be adjusted from its normal position into a blocking position in order to lock the overload locking module (44a; 44b) in the event of an overload.

4. Passenger seat device according to one of the preceding claims, **characterized in that** the overload locking module (44a; 44b) has a form-fitting element (52a; 52b) which is connected to the leg support module (20a; 20b) and which is configured to strike against the blocking element (50a; 50b) which is located in its blocking position in order to lock the overload locking module (44a; 44b) in the event of an overload.

5. Passenger seat device according to one of the preceding claims, **characterized by** a fastening element (46a; 46b) which is configured to connect the actuator (42a; 42b) to the mounting unit (14a; 14b), wherein the fastening element forms the blocking element (50a; 50b) of the overload locking module (44a; 44b).

6. Passenger seat device according to claim 5, **characterized in that** the overload locking module (44a; 44b) has a receptacle (48a; 48b) which is realized as an elongated hole and in which the fastening element (46a; 46b) is supported displaceably.

7. Passenger seat device according to claim 3, **characterized in that** the overload locking module (44a; 44b) has at least one spring module (56a; 56b) which is configured to exert a spring force on the blocking element (50a; 50b), which spring force is configured to hold the blocking element (50a; 50b) in its normal position in a normal operating state.

8. Passenger seat device according to claim 7, **characterized in that** the actuator (42a; 42b) has an overload force which is at least twice as great as a spring force of the spring module (56a; 56b).

9. Passenger seat device at least according to claim 6, **characterized in that** the bearing module (29a; 29b) has a bearing block (30a; 30b, 66b) which is configured to be fastened to the mounting unit (14a; 14b) and which forms the receptacle (48a; 48b) which is realized as an elongated hole and which is realized to connect the fastening element (46a; 46b).

10. Passenger seat device at least according to claim 4, **characterized in that** the leg support module (20a) has a base support (26a) which is connected pivotably to the mounting unit (14a) and which forms the form-fitting element (52a) of the overload locking module (44a).

11. Passenger seat device according to claim 7, **characterized in that** the spring module (56a; 56b) is configured to adjust the leg support module (20a; 20b) into its stowed position again after an overload force has ceased after locking has taken place.

12. Passenger seat, in particular aircraft seat, having a passenger seat device according to one of the preceding claims.

## Revendications

1. Dispositif de siège de passager, comprenant une unité de montant (14a; 14b), comprenant un module de support de jambe (20a; 20b) qui est supporté de manière pivotante sur l'unité de montant (14a; 14b), comprenant un module de palier (29a; 29b) qui est prévu pour déplacer le module de support de jambe (20a; 20b) entre une position de rangement et une position déviée au maximum, comprenant un actionneur (42a; 42b) qui est prévu pour exercer une force de déplacement sur le module de support de jambe (20a; 20b), comprenant un module de verrouillage de surcharge (44a; 44b) qui est prévu pour verrouiller mécaniquement le module de support de jambe (20a ; 20b) dans un cas de surcharge, **caractérisé en ce que** le module de verrouillage de surcharge (44a; 44b) est prévu pour convertir le moment d'inertie du module de support de jambe (20a; 20b) ou une force exercée sur l'actionneur (42a; 42b) en une force de déplacement pour verrouiller le module de verrouillage de surcharge (44a; 44b).

2. Dispositif de siège de passager selon la revendication 1, **caractérisé en ce qu'**une détection du cas de surcharge s'effectue de manière purement mécanique.

3. Dispositif de siège de passager selon l'une quelconque des revendications précédentes, **caractérisé en ce que** le module de verrouillage de surcharge (44a; 44b) présente un élément de blocage (50a; 50b) couplé à l'actionneur (42a; 42b), qui est prévu pour être déplacé de sa position normale dans une position de blocage pour le verrouillage du module de verrouillage de surcharge (44a; 44b) dans un cas de surcharge.

4. Dispositif de siège de passager selon l'une quelconque des revendications précédentes, **caractérisé en ce que** le module de verrouillage de surcharge (44a; 44b) présente un élément à complémentarité de forme (52a; 52b) qui est connecté au module de support de jambe (20a; 20b) et qui est prévu pour buter contre l'élément de blocage (50a; 50b) qui se trouve dans sa position de blocage pour le verrouillage du module de verrouillage de surcharge (44a; 44b) dans un cas de surcharge.

5. Dispositif de siège de passager selon l'une quelconque des revendications précédentes, **caractérisé par** un élément de fixation (46a; 46b) qui est prévu pour la liaison de l'actionneur (42a; 42b) à l'unité de montant (14a; 14b), l'élément de fixation formant l'élément de blocage (50a; 50b) du module de verrouillage de surcharge (44a; 44b).

6. Dispositif de siège de passager selon la revendication 5, **caractérisé en ce que** le module de verrouillage de surcharge (44a; 44b) présente un logement (48a; 48b) réalisé sous forme de trou oblong, dans lequel l'élément de fixation (46a; 46b) est supporté de manière déplaçable.

7. Dispositif de siège de passager selon la revendication 3, **caractérisé en ce que** le module de verrouillage de surcharge (44a; 44b) présente au moins un module de ressort (56a; 56b) qui est prévu pour exercer une force de ressort sur l'élément de blocage (50a; 50b), laquelle est prévue pour maintenir l'élément de blocage (50a; 50b) dans sa position normale dans un état de fonctionnement normal.

8. Dispositif de siège de passager selon la revendication 7, **caractérisé en ce que** l'actionneur (42a; 42b) présente une force de surcharge qui est au moins deux fois plus grande qu'une force de ressort du module de ressort (56a; 56b).

9. Dispositif de siège de passager au moins selon la revendication 6, **caractérisé en ce que** le module de palier (29a; 29b) présente un support de palier (30a; 30b, 66b) qui est prévu pour la fixation à l'unité de montant (14a; 14b) et qui forme le logement (48a; 48b) réalisé sous forme de trou oblong, qui est prévu pour la liaison de l'élément de fixation (46a; 46b).

10. Dispositif de siège de passager au moins selon la revendication 4, **caractérisé en ce que** le module de support de jambe (20a) présente un support de base (26a) qui est relié de manière pivotante à l'unité de montant (14a) et qui forme l'élément à complémentarité de forme (52a) du module de verrouillage de surcharge (44a).

11. Dispositif de siège de passager selon la revendication 7, **caractérisé en ce que** le module de ressort (56a; 56b) est prévu pour déplacer à nouveau le module de support de jambe (20a; 20b) dans sa position de rangement après un verrouillage effectué après la suppression d'une force de surcharge.

12. Siège de passager, en particulier siège d'avion, comprenant un dispositif de siège de passager selon l'une quelconque des revendications précédentes.
